Europäisches Patentamt

European Patent Office

Office européen des brevets

(19)

(11) Publication number: **0 426 945 A2**

# EUROPEAN PATENT APPLICATION

(21) Application number: 90111025.4

(22) Date of filing: 11.06.90

(51) Int. Cl.⁵: **G06F 3/023**

(30) Priority: 09.11.89 JP 289940/89

(43) Date of publication of application:
**15.05.91 Bulletin 91/20**

(84) Designated Contracting States:
**DE FR GB**

(71) Applicant: **Maki, Eiichi**
**2-2-39-403, Jingu-Mae**
**Shibuya-ku, Tokyo(JP)**

(72) Inventor: **Maki, Eiichi**
**2-2-39-403, Jingu-Mae**
**Shibuya-ku, Tokyo(JP)**

(74) Representative: **von Bezold, Dieter, Dr. et al**
**Dr. Dieter von Bezold Dipl.-Ing. Peter Schütz**
**Dipl.-Ing. Wolfgang Heusler Brienner Strasse**
**52**
**W-8000 München 2(DE)**

(54) Input device for computer.

(57) An input device with a keyboard in which a keyboard-input signal is stored in a storage medium, and otionally a signal code, which is read from the storage medium, is converted to a transmission code to enter into a keyboard interface portion of a computer.

Fig. 1

# INPUT DEVICE FOR COMPUTER

## BACKGROUND OF THE INVENTION

### Field of the Invention

The present invention relates to an input device for a computer with a keyboard, in which input informations with respect to keyboard operation are stored, and the informations may be optionally entered into one or more computers.

### Discription of the Prior Art

When operation of a computer with a program is carried out by entering with a keyboard, entering is conventionally carried out from a keyboard with respect to each computor, and operation of keys depends on programs of each computer. This makes it necessary to perform keyboard operation with respect to each computer in such a case, for example, that plural computers are used to carry out information processing simultaneously, resulting in that management and operation thereof are complicated.

## SUMMARY OF THE INVENTION

The object of the present invention is to provide an input device for a computer which is provided with:

a means for converting an input from each key of a keyboard to an identification code corresponding to the each key,

a memory means for storing the identification code, and

a means for converting the identification code to a transmission code to transmit,

in order to perfoem operation of plural computers by means of one keyboard input device.

Alternatively, another object of the present invention is to provide an input device for a computer according to the above-described input device for a computer, wherein it is provided with a means for performing signal conversion of the transmission code from the transmission means in correspondence with an interface portion of a computer which is subjected to be entered.

## BRIEF DESCRIPTION OF THE DRAWINGS

Fig. 1 is a blocked diagram with which an example of the present invention is intended to be explained.

Fig. 2 is a block diagram of a signal conversion device which constructs the present invention.

Fig. 3 is a flowchart with which an example of the present invention is intended to be explained.

Fig. 4 is a figure showing timings with which an example of the present invention is intended to be explained.

## DESCRIPTION OF THE PREFERRED EMBODIMENT

Examples of the present invention will be explained in reference to attached drawings as follows.

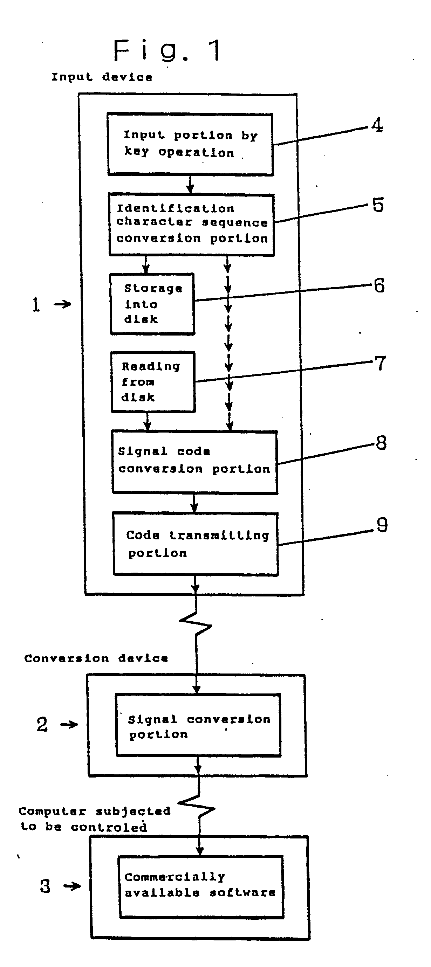

Fig. 1 is a whole blocked diagram showing an example of the present invention, wherein 1 is the input device for a computer, 2 is the signal conversion device, and 3 is the computer which is subjected to be controled.

4 is the input portion by key operation of said input device 1, wherein when a signal is entered into the input portion 4 by key operation of the keyboard, the input signal is converted to an identification character sequence corresponding to the input key in the identification character sequence conversion portion 5. This identification character sequence is predetermined so as to correspond to all keys on the keyboard.

This identification character sequence is once stored in a storage medium 6 such as a disk, which is optionally read from the storage medium (7 in the figure). The read identification character sequence is converted to a make/break code which corresponds to the identification character sequence in the signal code conversion portion 8. This make/break code is defined as make in case of pushing a key or as break in case of releasing a key, in which one key operation is expressed by means of two kinds of code. Concretely speaking, for example, when the return key which is a specific key is operated, the input signal thereof is converted to an identification code (CR), which is stored in the storage medium. On the other hand, when the identification character sequence (CR) is read from the storage medium, it is analyzed to convert to a make code (1C) and a break code (9C) which correspond to the return key in the signal code conversion portion 8.

On the other hand, in the present invention, a switching means (not shown) makes it possible to directly convert the identification character sequence to the make/break code in the signal code conversion portion 8 from the above-described identification character sequence conversion portion 5 without existing the storage medium therebetween.

The make/break conversion code in the above-described signal code conversion portion 8 is transmitted from the code transmitting portion 9 to the signal conversion portion 2. In particular, the make code is transmitted from the interface at first, and is subjected to rest in a moment (PAUSE) synchronizing with the computer which is subjected to be controled, after which the break code is transmitted. And then, it is subjected to pause during the time from the break code to transmitting the next make code, which is repeated hereinafter to sequentially transmit the signal code. In addition, this pausing time differs depending on the computer which is subjected to be controled or on the software.

The above-described signal conversion device 2 is for converting the code which is transmitted from the control computer 1 to the signal (make/break signal) and voltage, communication system, and communication speed which are equivalent to those of the keyboard input device of the computer 3 which is subjected to be controled. In this signal conversion device 2, an input terminal is connected to the interface for the telecommunication line of said input device 1, and an output terminal is connected to the keyboard interface of the computer 3.

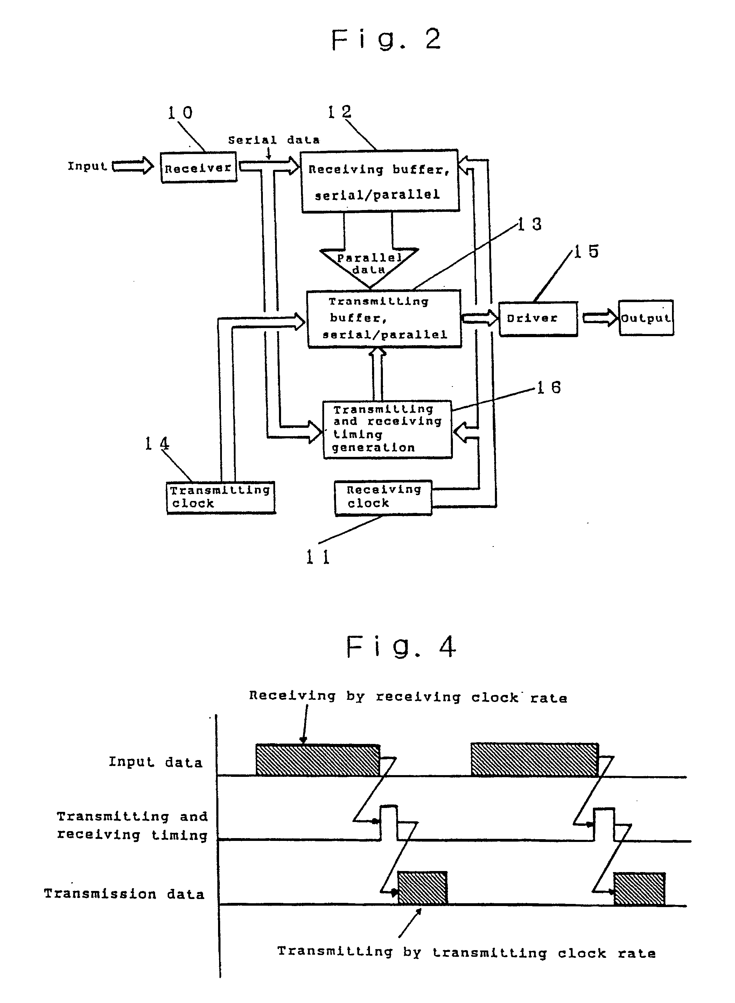

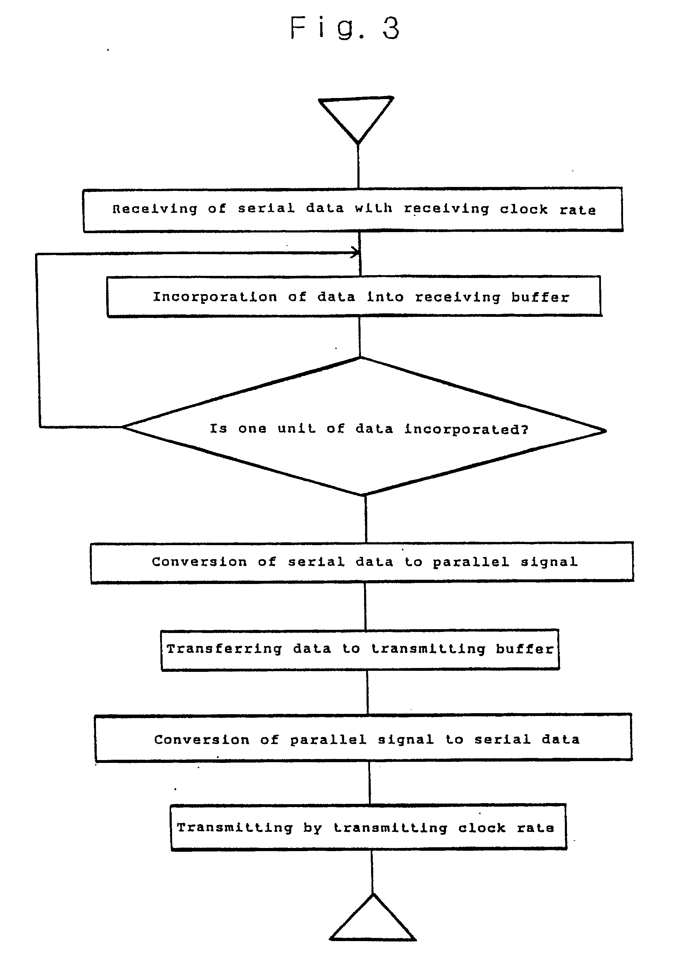

Fig. 2 is a block diagram of the above-described signal conversion device 2, Fig. 3 is a flowchart thereof, and Fig. 4 shows a figure of timings.

At first, the serial data, which is entered from the code input portion 9 of the above-described input device 1 through the receiver 10, is received by the clock rate from the receiving clock 11, one data unit of which (each make code and break code is defined as one data, respectively) is incorporated into the receiving buffer 12. After incorporating one unit of data, the serial data is converted to the parallel signal to transfer to the transmitting buffer 13.

In the transmitting buffer 13, the parallel data is converted to the serial data to provide an output with the transmitting clock rate 14 through the driver 15.

In addition, from the receiving and transmitting timing generating means 16, as shown in Fig. 4, the output of the switching signal for receiving/transmitting is provided. Namely, after completion of incorporating one unit of data into the receiving buffer 12, the output of the swiching signal is provided to genarate the output of the data from the transmitting buffer 13, simultaneously with wich the data is transferred from the receiving buffer 12 to the transmitting buffer.

The output of the data from the above-described signal conversion device 2 is entered from the keyboard interface of the computer 3 which is subjected to be controled, and the program operation of the computer 3 is performed according to the input data.

This computer 3 may be such one that has a keyboard interface, wherein the data from said signal conversion device 2 may be entered into one or more computers. Therefore, for example, the contents of key operation for the input device 1 is converted to the identification character sequence to store in the storage medium beforehand, which is read optionally to transmit the storage data thereof to the computer 3 through the signal code conversion portion 8, the code transmission portion 9 and the signal conversion device 2 to carry out infromation processing depending on the above, while in the mean time, it becomes possible to transmit another storage data to another computer to perform simultaneous operation of another information processing. In addition, direct input of the data from the key operation input portion 4 to the computer 3 may be possible.

However, the above-described example is an example of the present invention, so that for example, the signal conversion device 2 may be integrated into the main body of the input device 1, or may be an attached equipment of the input device 1. In addition, when the signal conversion function is contained in the computer 3 which is subjected to be controled, this device 2 may be omitted.

According to the present invention, for example, the keyboard operation of routine work may be made to codes to store in the storage madium 6 of the input device, so that the information may optionally be read from the storage medium 6 to operate the computer program in the same way as the keyboard operation by an operator. Therefore, labor saving and unmanned operation may be possible.

In addition, the output of the key operation signal code from the input device 1 to plural computers makes it possibel to control plural computers simultaneously, so that parallel and simultaneous processing of enormous informations may also be possible. And optionally, remote control for a computer in a remote place may also be possible.

In addition, in the present invention, it is not necessary to improve already-existing computer programs, so that the cost thereof is cheap.

Fig. 1

A Input device

4...Input portion by key operation
5...Identification character sequence conversion portion
6...Storage into disk
7...Reading from disk
8...Signal code conversion portion
9...Code transmitting portion

B Conversion device

2...Signal conversion portion

C Computer subjected to be controled

3...Commercially available software

Fig. 2

a...Input
b...Serial data
c...Parallel data
d...Output
10...Receiver
11...Receiving clock
12...Receiving buffer, serial/parallel
13...Transmitting buffer, serial/parallel
14...Transmitting clock
15...Driver
16...Transmitting and receiving timing generation

Fig. 4

a...Input data
b...Transmitting and receiving timing
c...Transmission data
d...Receiving by receiving clock rate
e...Transmitting by transmitting clock rate

Fig. 3

a...Receiving of serial data with receiving clock rate
b...Incorporation of data into receiving buffer
c...Is one unit of data incorporated?
d...Conversion of serial data to parallel signal
e...Transferring data to transmitting buffer
f...Conversion of parallel signal to serial data
g...Transmitting by transmitting clock rate

**Claims**

1. An input device for a computer with a keyboard, which is provided with following means:
a means for converting an input from each key of the keyboard to an identification code corresponding to the each key,
a memory means for storing the identification code,
a means for converting said identification code to a transmission code, and
a means for transmitting said converted code.

2. The input device for a computer according to claim 1, which is provided with a means for performing signal conversion of the transmission code in correspondence with an interface portion of a computer which is subjected to be entered.

# Fig. 1

Input device

```
┌─────────────────────────────────────┐
│  ┌───────────────────────┐           │──── 4
│  │ Input portion by      │           │
│  │ key operation         │           │
│  └───────────────────────┘           │
│             │                        │
│             ▼                        │
│  ┌───────────────────────┐           │──── 5
│  │ Identification        │           │
│  │ character sequence    │           │
│  │ conversion portion    │           │
│  └───────────────────────┘           │
│        │         ┊                   │
│        ▼         ┊                   │
│  ┌───────────┐   ┊                   │──── 6
│  │ Storage   │   ┊                   │
│  │ into      │   ┊                   │
│  │ disk      │   ┊                   │
│  └───────────┘   ┊                   │
│                  ┊                   │
│  ┌───────────┐   ┊                   │──── 7
│  │ Reading   │   ┊                   │
│  │ from      │   ┊                   │
│  │ disk      │   ┊                   │
│  └───────────┘   ┊                   │
│        │         ┊                   │
│        ▼         ▼                   │
│  ┌───────────────────────┐           │──── 8
│  │ Signal code           │           │
│  │ conversion portion    │           │
│  └───────────────────────┘           │
│             │                        │
│             ▼                        │
│  ┌───────────────────────┐           │──── 9
│  │ Code transmitting     │           │
│  │ portion               │           │
│  └───────────────────────┘           │
└─────────────────────────────────────┘
```

1 →

Conversion device

```
┌─────────────────────────────────┐
│  ┌───────────────────────┐       │
│  │ Signal conversion     │       │
│  │ portion               │       │
│  └───────────────────────┘       │
└─────────────────────────────────┘
```

2 →

Computer subjected
to be controled

```
┌─────────────────────────────────┐
│  ┌───────────────────────┐       │
│  │ Commercially          │       │
│  │ available software    │       │
│  └───────────────────────┘       │
└─────────────────────────────────┘
```

3 →

# Fig. 2

# Fig. 4

# Fig. 3

Receiving of serial data with receiving clock rate

Incorporation of data into receiving buffer

Is one unit of data incorporated?

Conversion of serial data to parallel signal

Transferring data to transmitting buffer

Conversion of parallel signal to serial data

Transmitting by transmitting clock rate